# EUROPÄISCHE PATENTSCHRIFT

(11) **EP 1 260 195 B1**
(45) Veröffentlichungstag und Bekanntmachung des Hinweises auf die Patenterteilung: **26.01.2005**
(21) Anmeldenummer: 02005782.4
(22) Anmeldetag: 13.03.2002
(51) Int. Cl.: A61C 19/00, G02B 5/04

(54) **Vorsatzelement für Lichtleiter**
Attachment for optical light guide
Adapteur pour guides de lumière

(30) Priorität: 18.05.2001 DE 10124367
(43) Veröffentlichungstag der Anmeldung: 27.11.2002
(73) Patentinhaber: Firma Ivoclar Vivadent AG, 9494 Schaan (LI)
(72) Erfinder: Plank, Wolfgang, 6830 Rankweil (AT); Stahl, Thomas, 78083 Dauchingen (DE); Rathke, Andreas, Dr., 9494 Schaan (LI)
(74) Vertreter: Splanemann Reitzner Baronetzky Westendorp Patentanwälte

(56) Entgegenhaltungen:
- EP-A- 0 376 148
- EP-A- 0 774 239
- US-A- 4 468 197
- US-A- 5 800 163
- PATENT ABSTRACTS OF JAPAN vol. 016, no. 565 (P-1457), 7. Dezember 1992 (1992-12-07) & JP 04 216522 A (NIPPON TELEGR & TELEPH CORP), 6. August 1992 (1992-08-06)

## Beschreibung

Die Erfindung betrifft ein Vorsatzelement, gemäß dem Oberbegriff.von Anspruch 1 sowie ein Lichthärtgerät gemäß dem Oberbegriff von Anspruch 13.

Es ist seit langem bekannt, Dentalersatzteile per Lichthärtung im Mund des Patienten auszuhärten. Eine beispielhafte Lösung ist aus der US-PS 4,063,360 zu entnehmen. Bei dieser Lösung wird über ein Lichtleitelement ultraviolettes Licht dem Zahnersätzteil zugeleitet und die dortige photopolymerisierbare Schicht soll durch das ultraviolette Licht ausgehärtet werden.

Um ein Aushärten mit der entsprechenden Sicherheit zu gewährleisten, ist es erforderlich, dass das ultraviolette Licht allen auszuhärtenden Bereichen des Zahnersatzteils in ausreichender Menge zugeführt wird.

Um die Durchhärtung zu verbessern, wird eine möglichst intensive Lichtbeaufschlagung in den Frequenzbereichen angestrebt, für die der verwendete Kunststoff besonders empfindlich ist.

Ferner ist es vorgeschlagen worden, die Lichtemission möglichst nahe an das Dentalersatzteil heranzuführen und auch das Dentalersatzteil von mehreren Seiten zu bestrahlen. Eine Lösung, bei der die Lichtquelle unmittelbar angrenzend an das Dentalersatzteil vorgesehen ist, ist aus der DE-GM 295 11 927, nämlich aus der Ausführungsform gemäß der dortigen Fig. 2, ersichtlich. Eine Lösung, bei der ein Dentalersatzteil von mehreren Seiten mit Licht zur Lichthärtung beaufschlagt wird, ist aus der US-PS 5,800,163 ersichtlich.

Andererseits ist es wünschenswert, mindestens auch Dentalersatzteile einem Härtvorgang zu unterziehen, deren Durchmesser größer als etwa der halbe Durchmesser des Lichtleitelements ist. Für derartige Dentalersatzteile ist die Lösung gemäß der US-PS 5,800,163 ungeeignet, und es muss auf andere Lichthärtgeräte zurückgegriffen werden, die eine Beaufschlagung des Dentalersatzteils lediglich von einer Seite bedingen. Das bekannte Lichthärtgerät ist zudem praktisch nur dann einsetzbar, wenn vorspringende Dentalersatzteile gehärtet werden müssen, nicht hingegen, wenn Inlays oder Onlays betroffen sind.

Die Druckschrift US-A-5 800 163 offenbart ein Verfahren sowie eine Vorrichtung zum Aushärten eines Klebeharzes mit Hilfe von Licht. Die Vorrichtung weist ein Lichtleitelement (60) auf, welches mit einem Vorsatzelement (10) optisch verbunden ist, wobei das Lichtleitelement (60) durchtretendes Licht durch das Vorsatzelement (10) ablenkbar ist. Jedoch ist Licht durch das Vorsatzelement gemäß dieser Druckschrift nicht hindurchleitbar.

Wie in der Beschreibung von dieser Offenbarung unter Spalte 3, Zeilen 15-21 beschrieben, weist das Körperteil (30) eine Längsverlaufende Bohrung (40) auf, wobei ein Teil der Bohrung (40) an einem Endbereich (34) des Körperteils (30) eine orthodontische "Bracket (20)" umgibt. Somit ist das Vorsatzelement nicht durch Seitenschenkel definiert. Das offenbarte Vorsatzelement weist eine durchlaufende zylindrische Struktur auf, die nicht unterbrochen ist, um zwei Seitenschenkel auszubilden aus welchen Licht austreten kann.

Die Druckschrift JP-A-0 4216 522 offenbart ein optisches Vorsatzelement, welches in optische Verbindung mit Lichtleitelemente bringbar ist und Reflexionsflächen aufweist, die derart angeordnet sind, dass das aus dem Lichtleitelement austretende Licht in entsprechender Weise abgelenkt wird.

Die nächste Druckschrift EP-A-0 774 239 offenbart ein Lichthärtgerät (10, insbesondere für durch Bestrahlung aushärtbare Dentalmassen, mit einer Lichtquelle und einer Lichtleitvorrichtung (12), wie ein Lichtleiter, der einen Lichteintritt aufweist.

In Anbetracht der zuvor diskutierten Druckschriften zum Stand der Technik liegt der Erfindung die Aufgabe zugrunde, ein Vorsatzelement für ein Lichtleitelement gemäß dem Oberbegriff von Anspruch 1 sowie ein Lichthärtgerät, insbesondere für die Härtung von Dentalrestaurationsteilen zu schaffen, welche universeller einsetzbar sind, ohne dass bei komplexen Formen des Dentalersatzteils Störungen zu erwarten wären.

Diese Aufgabe wird in überraschend einfacher Weise durch den Gegenstand des Anspruches 1 sowie durch den Gegenstand des Anspruches 11 gelöst, wie dies ausführlich oben beschrieben wurde.

Erfindungsgemäß besonders günstig ist es, dass das als prismatischer Körper ausgebildete Vorsatzelement sich hinterschneidungsfrei nach vorne erstreckt. Nachdem der Strahlengang innerhalb des prismatischen Korpers vorgesehen ist, sind Störungen durch beispielsweise Brückenelemente, die in den Strahlengang hineinragen würden, ausgeschlossen. Durch die besondere Ausgestaltung mit der mehrfachen Umlenkung des Strahlengangs in dem prismatischen Körper lässt sich zudem der Durchmesser des zu behandelnden Dentalersatzteils wesentlich vergrößern, beispielsweise im wesentlichen auf den Durchmesser des Lichtleitelements, aber bei Bedarf auch auf größere Durchmesser.

Erfindungsgemäß ist dies möglich durch die Realisierung eines prismatischen Körpers, der Schrägflächen aufweist, wobei die im Strahlengang erste Schrägfläche nach außen weist, beispielsweise im Winkel von 45°. In einer bei prismatischen Körpern an sich bekannten Weise wird aufgrund des unterschiedlichen Brechungsindex' zwischen dem Körper und Luft das Licht dort reflektiert, so dass der Strahlengang dort im Winkel von 90°, das heißt, radial nach außen, verläuft.

Je nachdem, wie weit sich der prismatische Körper dort nach außen erstreckt, erfolgt ein Versatz der Strahlung nach außen hin, so dass die Stärke des prismatischen Körpers an dieser Stelle über den Versatz nach außen entscheidet.

Durch eine außenliegende Schrägfläche, deren Winkel dem Winkel der innenliegenden Schrägfläche entspricht, wird der Strahlengang wieder in achsparallele Richtung umgelenkt. Er trifft knapp vor der Spitze des Vorsatzelements auf eine weitere Schrägfläche, die sich nach innen erstreckt, so dass der Strahlengang radial nach innen umgelenkt wird. Er durchtritt die Grenzfläche zwischen prismatischem Körper und Luft in senkrechter Richtung, so dass der Reflexionsgrad dort nahe 0 ist.

Es versteht sich, dass es gemäß einer bevorzugten Ausgestaltung vorgesehen sein kann, als prismatischen Körper einen Körper mit einer hohen Lichtdurchlässigkeit zu verwenden, so dass die Verluste durch das Vorsatzelement sich höchstens im einstelligen Prozentbereich bewegen. Auch kann es gemäß einer weiteren günstigen Ausgestaltung vorgesehen sein, die schrägflächen je zu verspiegeln, um den Reflexionsgrad nahe 100 % zu erreichen.

Gemäß einem weiteren, besonders günstigen Gesichtspunkt ist das Vorsatzelement so mit dem Lichtleitelement verbunden, dass es nicht versehentlich verloren gehen kann. Um dies zu erreichen, ist es vorgesehen, dass das Vorsatzelement eine Buchse aufweist, in die das Ende des Lichtleitelements stramm eingesteckt werden kann. In vorteilhafter Ausgestaltung ist der Durchmesser der Buchse sogar etwas kleiner als der Durchmesser des Endes des Lichtleitelements. Das Einstecken ist über eine Einführschräge möglich, und das Vorsatzelement sitzt dann unter Spannung fest auf dem Lichtleitelement.

Durch den festen Sitz ist auch die optische Ausrichtung in der gewünschten Weise gewährleistet, so dass Verluste der Lichtleistung nicht zu befürchten sind.

Es versteht sich, dass die feste Verankerung des Vorsatzelements auf dem Lichtleitelement in beliebiger Weise sichergestellt werden kann. So ist es beispielsweise möglich, einen Bajonettverschluss vorzusehen, der das Vorsatzelement auf dem Lichtleitelement verankert.

Bei Bedarf können auch unterschiedliche Vorsatzelemente bereitgestellt werden, um je nach der Art des zu härtenden Dentalersatzteils der Polymerisation dienendes Licht abzugeben. Durch die Länge der Schrägflächen lässt sich einstellen, wie groß der Lichtaustrittsbereich an der Spitze des Vorsatzelements ist.

Gemäß einer weiteren modifizierten Ausgestaltung ist es vorgesehen, mindestens die dritte Reflexionsfläche in dem vorderen Ende des Vorsatzelements konvex gekrümmt auszubilden. Hierdurch ist es möglich, das emittierte Licht noch stärker auf das Dentalrestaurationsteil zu fokussieren, um so eine verbesserte Lichtausbeute zu ermöglichen.

Erfindungsgemäß besonders günstig ist es, dass das erfindungsgemäße Vorsatzelement einen Großteil der von dem Lichtleitelement emittierten Strahlung erfasst und auf das Dentalrestaurationsteil überträgt, und insbesondere, dass die Anwendung des erfindungsgemäßen Vorsatzelements auch dann möglich ist, wenn eine Lichthärtung im Mund des Patienten angestrebt wird.

Erfindungsgemäß erstreckt sich zwischen den Schenkeln des U-förmigen Vorsatzelements dementsprechend eine Art Kanal, der eine freie Positionierung des Vorsatzelements ermöglicht.

Weitere Vorteile, Einzelheiten und Merkmale ergeben sich aus der nachfolgenden Beschreibung eines Ausführungsbeispiels anhand der Zeichnung.

Es zeigen:
- Fig. 1: eine Ansicht eines erfindungsgemäßen Vorsatzelements in dem auf ein Lichtleitelement aufgesteckten Zustand;
- Fig. 2: das Vorsatzelement gemäß Fig. 1 in der Seitenansicht; und
- Fig. 3: das Vorsatzelement gemäß Fig. 1 und Fig. 2 in der Vorderansicht.

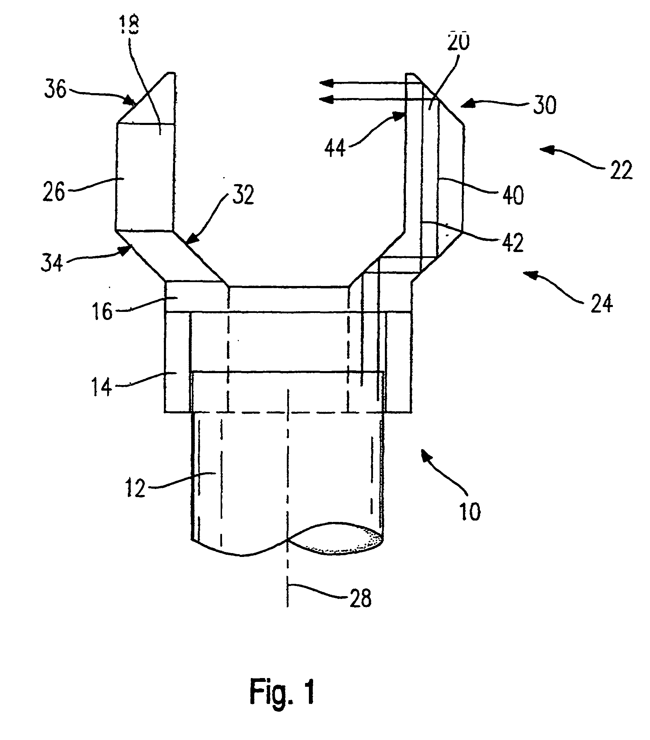

In Fig 1 ist eine Ausführungsform eines erfindungsgemäßen Vorsatzelements 10 dargestellt. Das Vorsatzelement ist in dem dargestellten Ausführungsbeispiel auf ein Lichtleitelement 12 aufgesteckt und vorzugsweise aus transparentem Kunststoff gefertigt. Das Lichtleitelement ist in diesem Fall als Lichtleiter ausgebildet, der Licht einer Lichtquelle verlustarm dem Mundbereich des Patienten zuführt. Zur Befestigung des Vorsatzelements 10 auf dem Lichtleitelement 12 ist eine Buchse 14 als Teil des Vorsatzelements 10 vorgesehen, deren Innendurchmesser zum Außendurchmesser des Lichtleitelements 12 passt. Das Vorsatzelement besteht aus einem durchsichtigen Kunststoff wie Polykarbonat. Die Elastizität ist ausreichend, um einen festen Sitz der Buchse 14 auf dem Lichtleitelement 12 zu gewährleisten.

Auch wenn in Fig. 1 ein nicht vollständig eingesteckter Zustand des Lichtleitelements 12 in die Buchse 14 dargestellt ist, versteht es sich, dass bei Bedarf auch ein vollständiges Einstecken möglich ist.

Lichtleiter weisen häufig an ihrem Außenumfang die höchste Lichtintensität auf. Die dort vorhandene Strahlung wird erfindungsgemäß von dem Vorsatzelement erfasst. Das Vorsatzelement weist einen Verteilbereich 16 auf, an dem sich zwei Schenkel 18 und 20 erstrecken. Der Verteilbereich 16 ist ebenfalls bevorzugt aus transparentem Kunststoff gefertigt und sitzt wie eine Art Deckel über der Buchse 14. Der Raum aus der Buchse 14 und dem Verteilelement 16 ist somit ein zylinderförmiger Teil mit einem Abschlussdeckel des Aufsatzelements. Im vorderen Bereich ist das Vorsatzelement 10 im wesentlichen U-förmig.

Während in dem dargestellten Ausführungsbeispiel der Verteilbereich 16 als kurzer zylindrischer Körper ausgebildet ist, versteht es sich, dass bei Bedarf auch eine Lichtführung und Umlenkung dort vorgesehen sein kann, etwa dann, wenn eine gleichmäßige Lichtverteilung ausgangsseitig des Lichtleitelements 12 besteht.

Die Schenkel 18 und 20 bilden für den vorderen Bereich 22 des Vorsatzelements 10 eine im wesentlichen U-förmige Ausgestaltung. Der Schenkel ist in einer besonderen Weise ausgebildet, die nachstehend beschrieben wird.

Der Schenkel 18 verläuft ausgehend vom Verteilbereich 16 zunächst im Winkel von 45° schräg nach außen. Dort bildet das Verteilelement insofern einen Aufweitbereich 24.

Anschließend hieran verläuft der Schenkel 18 in einem achsparallelen Bereich 26 im wesentlichen parallel zur optischen Achse 28 des Lichtleitelements.

An dem vorderen Ende des Vorsatzelements 10 benachbart ist ein Umlenkbereich 30 vorgesehen, der den Strahlengang radial nach innen umlenkt.

Um einen derartigen Strahlengang zu ermöglichen weist der Aufweitbereich 24 eine erste Schrägfläche 32 auf. Die Schrägfläche 32 erstreckt sich im Winkel von 45° an der Innenseite des Schenkels 18 schräg nach außen verlaufend. Der Schrägfläche 32 gegenüberliegend ist außen eine zweite Schrägfläche 34 vorgesehen, die sich parallel zur ersten Schrägfläche erstreckt.

Der Umlenkbereich 30 weist ebenfalls eine dritte Schrägfläche 36 auf.

Der Schenkel 20 ist spiegelsymmetrisch zum Schenkel 18 ausgebildet, so dass entsprechende Schrägflächen dort in gleicher Weise vorliegen.

In Fig. 1 ist beispielhaft der Strahlengang 40 eines am äußeren Rand des Lichtleitelements emittierten Lichtstrahls dargestellt, sowie auch der Strahlengang 42 eines etwas weiter in der Mitte emittierten Lichtstrahls. Es ist ersichtlich, dass durch die dreifache Umlenkung der Strahlengang 40 und auch Strahlengang 42 eine Austrittsfläche 44 des prismatischen Körpers, der das Vorsatzelement 10 bildet, im wesentlichen senkrecht durchtritt. Dort verlaufen die Strahlengänge 40 und 42 dementsprechend radial nach innen und beaufschlagen das dort befindliche Dentalrestaurationsteil.

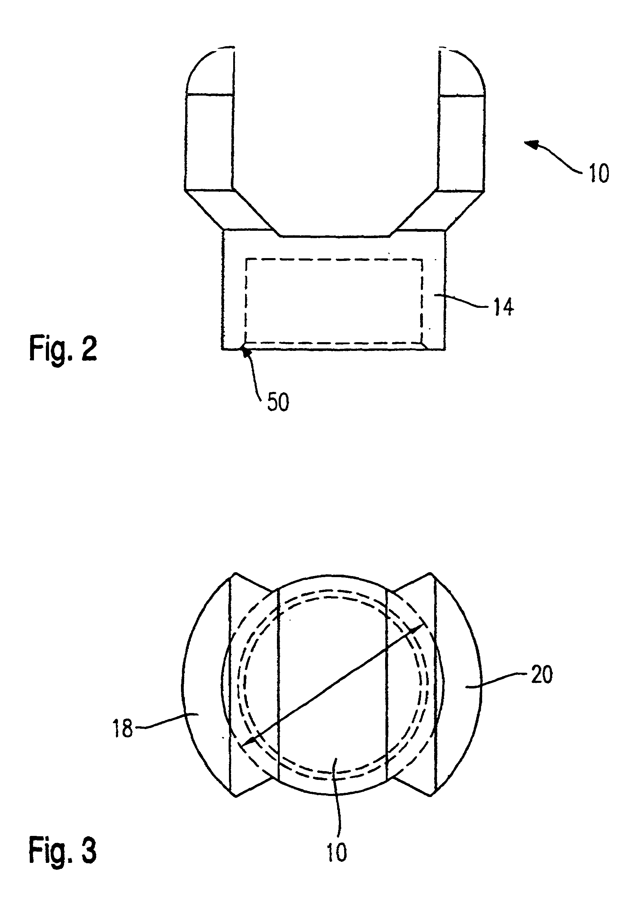

Aus Fig. 2 ist das Vorsatzelement 10 gemäß Fig. 1 in etwas besserer Auflösung und Detailtreue ersichtlich. Es ist ersichtlich, dass am unteren Innenrand der Buchse 14 eine Einführschräge 50 angebracht ist, die sich etwa im Winkel von 45° erstreckt und das Einführen des Lichtleitelements 12 auch dann erlaubt, wenn der Durchmesser des Lichtleitelements 12 dem Innendurchmesser der Buchse 14 entspricht.

Aus Fig. 3 ist ersichtlich, dass sich die Schenkel 18 und 20 des Vorsatzelements 10 über einen wesentlichen Winkelbereich des Vorsatzelements 10 erstrecken. Insgesamt wird deutlich mehr als die Hälfte der ringförmig austretenden Strahlung des Lichtleitabschnitts erfasst und den Schenkeln 18 und 20 zugeleitet.

Es versteht sich, dass Anpassungen der genauen Form der Schrägflächen in weiten Bereichen an die Erfordernisse erfolgen können. Beispielsweise können die Schrägflächen 32 bis 36 in der Draufsicht betrachtet gebogen sein oder sie können gerade verlaufen, je nachdem, ob eine zusätzliche Fokussierung erwünscht ist oder nicht. Auch kann die Schrägfläche 36 etwas gekrümmt sein, wie es in Fig. 2 dargestellt ist, so dass eine zusätzliche Fokussierung erfolgt.

## Patentansprüche

1. Vorsatzelement für ein Lichtleitelement, bestehend aus einem transparenten prismatischen Körper (10), der mit dem Lichtleitelement (12) derart optisch verbindbar ausgebildet ist, dass in einer ersten Richtung aus dem Lichtleitelement (12) austretendes Licht durch ihn hindurchgeleitet und abgelenkt wird, und der zwei lichtleitende Seitenschenkel (18, 20) aufweist, welche so ausgebildet sind, dass das Licht an ihren Enden in den zwischen ihnen liegenden Raum näherungsweise senkrecht zur besagten ersten Richtung austritt, und wobei für einen radialen Versatz der aus dem Lichtleiter austretenden Strahlung die Seitenschenkel jeweils eine erste Reflexionsfläche (32) aufweisen, die sich im Winkel von etwa 45° in bezug auf die besagte erste Richtung schräg nach außen erstrecken und an welchen das Licht im wesentlichen senkrecht zur besagten ersten Richtung nach außen reflektiert wird.

2. Vorsatzelement nach Anspruch 1,
**dadurch gekennzeichnet, dass** die Verbindung zwischen dem Vorsatzelement (10) und dem Lichtleitelement (12) eine Steckverbindung ist.

3. Vorsatzelement nach einem der Ansprüche 1 oder 2,
**dadurch gekennzeichnet, dass** das Vorsatzelement (10) zwei einander diametral gegenüberliegende Seitenschenkel (18, 20) aufweist, die von dem Licht durchtreten sind und deren Spitzen Lichtaustrittsflächen (44) aufweisen, die sich im Wesentlichen parallel zur ersten Richtung erstrecken.

4. Vorsatzelement nach einem der vorhergehenden Ansprüche,
**dadurch gekennzeichnet, dass** das Vorsatzelement (10) in seinem vorderen Bereich (22) eine lichte Weite aufweist, die im Wesentlichen dem Durchmesser des Lichtleitelements (12), im Falle eines ringförmigen Lichtleitelements, entspricht.

5. Vorsatzelement nach einem der vorhergehenden Ansprüche,
**dadurch gekennzeichnet, dass** die Seitenschenkel (18, 20) sich vor dem Lichtleitelement (12) erstrecken, dessen Lichtkanal sich im Wesentlichen ringförmig erstreckt.

6. Vorsatzelement nach Anspruch 1,
**dadurch gekennzeichnet, dass** das vorsatzelement (10) eine zweite Reflexionsfläche aufweist, die sich parallel zur ersten Reflexionsfläche erstreckt und die mit dem senkrecht nach außen fallenden Licht beaufschlagbar ist, und das Licht im Wesentlichen parallel zur ersten Richtung umlenkt.

7. Vorsatzelement nach Anspruch 6,
**dadurch gekennzeichnet, dass** sich eine dritte Reflexionsfläche (36) in Richtung des aus dem Lichtleitelement (12) austretenden Lichts betrachtet nach der zweiten Reflexionsfläche (34) erstreckt und das einfallende Licht im Wesentlichen senkrecht zur ersten Richtung nach innen umlenkt.

8. Vorsatzelement nach einem der vorhergehenden Ansprüche,
**dadurch gekennzeichnet, dass** die Seitenschenkel (18, 20) des Vorsatzelements (10) sich betrachtet in der Vorderansich über einen Winkel von je mindestens 45°, insbesondere etwa 120°, segmentartig erstrecken (Fig. 3).

9. Vorsatzelement nach einem der vorhergehenden Ansprüche,
**dadurch gekennzeichnet, dass** das Vorsatzelement (10) aus Kunststoff besteht, insbesondere aus Polycarbonat.

10. Vorsatzelement nach einem der vorhergehenden Ansprüche,
**dadurch gekennzeichnet, dass** das Vorsatzelement (10) polierte Oberflächen aufweist.

11. Lichthärtgerät, insbesondere für die Härtung von Dentalrestaurationsteilen, bestehend aus einem Lichtleitelement (12) und einem daran lösbar befestigten Vorsatzelement (10),
wobei das Vorsatzelement (10), durch welches das Licht hindurchführbar ist, als prismatischer Körper ausgebildet ist und lichtleitende Seitenschenkel (18, 20) mit je einer ersten Reflexions-fläche (32) für die Reflexion des Lichts nach außen aufweist, und dass das Licht aus den Seitenschenkeln nach innen näherungsweise senkrecht austrift.

12. Lichthärtgerät nach Anspruch 11,
**dadurch gekennzeichnet, dass** die Verbindung zwischen Vorsatzelement (10) und dem Lichtleitelement (12) formschlüssig ist, insbesondere eine Schraub-, Rast- oder Pressverbindung ist.

## Claims

1. An attachment element for a light guide element, comprising a transparent prismatic body (10) which is designed so that it can be optically connected to the light guide element (12) in such a way that light emerging in a first direction from the light guide element (12) is guided therethrough and is deflected, and which has two light-guiding side arms (18,20) which are so designed that the light emerges at their ends into the space situated between them approximately perpendicular to said first direction,
and wherein for radial offsetting of the radiation emerging from the light guide the side arms each have a first reflecting surface (32), which surfaces extend obliquely outwards at an angle of approximately 45° in relation to said first direction and on which the light is reflected outwards substantially perpendicularly to the said first direction.

2. An attachment element according to Claim 1, **characterised in that** the connection between the attachment element (10) and the light guide element (12) is a plug-and-socket connection.

3. An attachment element according to either Claim 1 or Claim 2, **characterised in that** the attachment element (10) has two diametrically opposite side arms (18,20) through which the light passes and the tips of which have light-outlet surfaces (44) which extend substantially parallel to the first direction.

4. An attachment element according to any one of the preceding Claims, **characterised in that** in its front region (22) the attachment element (10) has an unobstructed width which corresponds substantially to the diameter of the the light guide element (12), in the case of an annular light guide element.

5. An attachment element according to any one of the preceding Claims, **characterised in that** the side arms (18,20) extend in front of the light guide element (12), the light passage of which extends substantially annularly.

6. An attachment element according to Claim 1, **characterised in that** the attachment element (10) has a second reflecting surface which extends parallel to the first reflecting surface and on which the perpendicularly outward incident light can act, and which deflects the light substantially parallel to the first direction.

7. An attachment element according to Claim 6, **characterised in that** a third reflecting surface (36) extends in the direction of the light emerging from the light guide element (12) viewed towards the second reflecting surface (34) and deflects inwards the incident light substantially perpendicularly to the first direction.

8. An attachment element according to any one of the preceding Claims, **characterised in that** the side arms (18,20) of the attachment element (10), viewed in a front view, extend segment-like (Fig. 3) through an angle of at least 45°, in particular approximately 120°.

9. An attachment element according to any one of the preceding Claims, **characterised in that** the attachment element (10) consists of plastics material, in particular polycarbonate.

10. An attachment element according to any one of the preceding Claims, **characterised in that** the attachment element (10) has polished surfaces.

11. A light curing apparatus, in particular for curing dental restoration parts, comprising a light guide element (12) and an attachment element (10) detachably mounted thereon, wherein the attachment element (10), through which the light can pass, is in the form of a prismatic body and has light-guiding side arms (18,20) with a respective first reflecting surface (32) for reflecting the light outwards, and in that the light emerges inwardly and approximately perpendicularly from the side arms.

12. A light curing apparatus, according to Claim 11, **characterised in that** the connection between the attachment element (10) and the light guide element (12) is form-locking, in particular a screw connection, a detent connection or a press-fit connection.

## Revendications

1. Adaptateur pour un guide de lumière constitué d'un corps prismatique transparent (10), qui est formé de manière à pouvoir être relié optiquement au guide de lumière (12) de sorte que la lumière issue du guide de lumière (12) dans une première direction traverse l'adaptateur et soit déviée, et qui présente deux branches latérales (18, 20) conductrices de lumière qui sont formées de telle sorte que la lumière, à leurs extrémités, pénètre dans l'espace se trouvant entre elles de manière approximativement perpendiculaire à ladite première direction et dans lequel, pour un décalage radial du rayonnement provenant du guide de lumière, les branches latérales présentent chacune une première surface de réflexion (32) inclinée vers l'extérieur à un angle d'environ 45° par rapport à ladite première direction et sur laquelle la lumière est réfléchie vers l'extérieur sensiblement perpendiculairement à ladite première direction.

2. Adaptateur selon la revendication 1, **caractérisé en ce que** la connexion entre l'adaptateur (10) et le guide de lumière (12) est une connexion par fiche.

3. Adaptateur selon l'une des revendications 1 ou 2, **caractérisé en ce que** l'adaptateur (10) présente deux branches latérales diamétralement opposées l'une à l'autre (18, 20), qui sont traversées par la lumière et dont les extrémités présentent des plans de sortie (44) de la lumière qui s'étendent sensiblement parallèlement à la première direction.

4. Adaptateur selon l'une des revendications précédentes, **caractérisé en ce que** l'adaptateur (10) présente dans sa zone avant (22) une largeur lumineuse qui correspond sensiblement au diamètre du guide de lumière (12), dans le cas d'un guide de lumière annulaire.

5. Adaptateur selon l'une des revendications précédentes, **caractérisé en ce que** les branches latérales (18, 20) s'étendent devant le guide de lumière (12) dont le canal lumineux s'étend sensiblement en anneau.

6. Adaptateur selon la revendication 1, **caractérisé en ce que** l'adaptateur (10) présente une deuxième surface de réflexion qui s'étend parallèlement à la première surface de réflexion, et qui peut être alimentée par la lumière tombant verticalement vers l'extérieur, et qui dévie la lumière sensiblement parallèlement à la première direction.

7. Adaptateur selon la revendication 6, **caractérisé en ce qu'**une troisième surface de réflexion (36) s'étend vers la deuxième surface de réflexion (34), en considérant la direction de la lumière sortant du guide de lumière (12), et conduit la lumière incidente sensiblement perpendiculairement à la première direction vers l'intérieur.

8. Adaptateur selon l'une des revendications précédentes, **caractérisé en ce que** les branches latérales (18, 20) de l'adaptateur (10), vues de devant, s'étendent chacune à un angle d'au moins 45°, en particulier d'environ 120°, de manière segmentée (figure 3).

9. Adaptateur selon l'une des revendications précédentes, **caractérisé en ce que** l'adaptateur (10) est en plastique, en particulier en polycarbonate.

10. Adaptateur selon l'une des revendications précédentes, **caractérisé en ce que** l'adaptateur (10) présente des surfaces polies.

11. Appareil de durcissement par la lumière, en particulier pour le durcissement d'éléments de restauration dentaire, constitué d'un guide de lumière (12) et d'un adaptateur (10) fixé de manière amovible à celui-ci, dans lequel l'adaptateur (10), à travers lequel la lumière peut être introduite, est formé comme un corps prismatique et présente des branches latérales (18, 20) conductrices de lumière ayant chacune une première surface de réflexion (32) pour réfléchir la lumière vers l'extérieur et dans lequel la lumière issue des banches latérales s'écoule approximativement perpendiculairement vers l'intérieur.

12. Appareil de durcissement par la lumière selon la revendication 11, **caractérisé en ce que** la connexion entre l'adaptateur (10) et le guide de lumière (12) est mécanique, et est en particulier une connexion par vis, par crémaillère ou par emmanchement.
